**Europäisches Patentamt**

**European Patent Office**

**Office européen des brevets**

(19)

(11) Veröffentlichungsnummer : **0 168 625**
**B1**

(12) ## EUROPÄISCHE PATENTSCHRIFT

(45) Veröffentlichungstag der Patentschrift :
09.09.87

(21) Anmeldenummer : 85107080.5

(22) Anmeldetag : 07.06.85

(51) Int. Cl.⁴ : **C 09 K 3/00**, B 05 D 1/02

(54) **Einkomponentenformulierung zur Entklebung und Koagulation von Kunstharzlackanteilen in Nassabscheidern von Spritzlackieranlagen und deren Verwendung.**

(30) Priorität : 07.06.84 DE 3421289

(43) Veröffentlichungstag der Anmeldung :
22.01.86 Patentblatt 86/04

(45) Bekanntmachung des Hinweises auf die Patenterteilung : 09.09.87 Patentblatt 87/37

(84) Benannte Vertragsstaaten :
AT BE CH FR GB IT LI LU NL SE

(56) Entgegenhaltungen :
GB-A- 2 011 371

(73) Patentinhaber : Zeller + Gmelin GmbH & Co
Schlossstrasse 20
D-7332 Eislingen / Fils (DE)

(72) Erfinder : Seng, Hans-Peter, Dr.
Spitzenbergweg 1
D-7334 Süssen (DE)

(74) Vertreter : Zumstein, Fritz jun., Dr. et al
Dr. F. Zumstein sen. Dr. E. Assmann Dr. R. Koenigsberger Dipl.-Ing. F. Klingseisen Dr. F. Zumstein jun.
Bräuhausstrasse 4
D-8000 München 2 (DE)

**0 168 625**

**Beschreibung**

In Spritzlackieranlagen wird Lack unter Druck durch Düsen fein verteilt auf zu lackierende Gegenstände, beispielsweise Autos, gesprüht. Dies geschieht in sogenannten Spritzkabinen, Spritzständen oder an Spritzwänden. Der hierbei entstehende Farbnebel muß aus der Luft wieder entfernt werden. Hierzu wird die mit Farbnebeln verunreinigte Luft mittels Ventilatoren durch Farbnebel-Naßabscheider gesaugt, in denen Wasser im Gegenstrom geführt und durch Einbauten und dergleichen in innigen Kontakt mit der Farbnebel enthaltenden Luft gebracht wird. Ein derartiger farbnebel-Naßabscheider ist aus der DE-AS 12 69 594 bekannt.

Zum Ausfällen und Koagulieren der in dem ständig in dem Naßabscheider umgewälzten Wasser abgeschiedenen Lackpartikel werden dem Wasser üblicherweise alkalisch reagierende Mittel, sogenannte Lacktklebungs- oder -koagulierungsmittel beigegeben. Hierdurch wird die Neigung der Lackpartikel, an den Wänden des Naßabscheiders und sonstigen Bauelementen sich abzulagern, verringert, wodurch Funktionsstörungen und ein erheblicher Wartungs- und Reinigungsaufwand vermieden werden. Auch der Abtransport und die endgültige Lagerung des Lackschlamms wird erleichtert, wenn er aus einem nicht klebenden Lackkoagulat besteht.

Eine Arbeitsweise dieser Art wird in der DE-OS 27 58 873 beschrieben, die ein Verfahren zum Ausfällen von Kunstharzlacken in Farbnebel-Naßabscheidern von Spritzlackieranlagen unter Verwendung von alkalisch eingestelltem Wasser mit einem Lackpartikel einhüllenden Zuschlagsstoff betrifft, das dadurch gekennzeichnet ist, daß als Zuschlagsstoff eine wäßrige Wachsdispersion eingesetzt wird. Hierbei soll das Wasser auf einen pH-Wert von 8,0 bis 13,5 eingestellt werden, wozu konzentrierte wäßrige Natronlauge eingesetzt wird. Die als Zuschlagsstoff eingesetzte Wachsdispersion enthält vorteilhaft ein Gemisch aus Montanwachs und Paraffinabkömmlingen. Es handelt sich hierbei um eine Zweikomponentenformulierung, da außer der Wachsdispersion getrennt Alkali zugeben wird.

Weiterhin ist es, wie die Praxis gezeigt hat, bei diesem Verfahren erforderlich, in Gegenwart von Tensiden zu arbeiten, wenngleich die Verwendung von Tensiden dort lediglich als vorteilhaft bezeichnet wird.

Das beschriebene Verfahren besitzt auch den Nachteil, daß nur absinkender Lackschlamm anfällt und daß es demzufolge nur für Großanlagen, vorwiegend im Bereich der fahrzeugproduzierenden Industrie, Verwendung findet. Zudem ist dieses Verfahren nicht in der Lage, Wasserlack bzw. Hydrolack zu koagulieren, da die zur Einstellung des pH-Werts verwendete Natronlauge der Koagulierung dieses Lacks entgegenwirkt.

Ziel der Erfindung war es daher, eine Zusammensetzung in Form einer Einkomponentenformulierung zur Entklebung und Koagulation von Kunstharzlackanteilen in Naßabscheidern von Spritzlackieranlagen zu schaffen, mit Hilfe derer man den Lackschlamm auch flottieren lassen kann und die auch für die Entklebung und Koagulation von Wasserlack bzw. Hydrolack geeignet ist. Weiteres ziel der Erfindung 'was es, eine Einkomponentenformulierung zu schaffen, die im gegensatz zum genannten Stand der Technick weitgehend ohne weitere Zusätze, insbesondere ohne Tenside, auskommt.

Diese Ziele werden insbesondere durch Einsatz einer spezifischen Wachskomponente in Kombination mit einer speziellen basischen Komponente erreicht.

Gegenstand der Erfindung ist daher eine Einkomponentenformulierung zur Entklebung und Koagulation von Kunstharzlackanteilen in Naßabscheidern von Spritzlackieranlagen sowohl zum Flottieren- als auch Sedimentierenlassen des entklebten Lackschlamms gekennzeichnet durch eine Gehalt an

a) 5 bis 20 Gew.-% Carnaubawachs oder Rohmontanwachs

b) 10 bis 30 Gew.-% eines Aminoalkohols, Aminoalkoholderivats oder von Morpholin und gegebenenfalls

c) 0,1 bis 5 Gew.-% eines Entschäumers,

jeweils bezogen auf das Gewicht der Formulierung, wobei der Rest der Formulierung durch Wasser gebildet wird.

Die erfindungsgemäß eingesetzten Wachskomponenten (Carnaubawachs und Rohmontanwachs) besitzen die der nachstehenden Tabelle 1 zu entnehmenden Kenndaten, die auch aus der Fachliteratur bekannt sind (siehe « Ullmann's Enzyklopädie der technischen Chemie », Bd. 18, Seiten 281-283 und 292-295 ; « Fette-Seifen-Anstrichmittel », 1965, 67. Jhrg., Heft 5, Seiten 334-340 und « Römpps Chemie-Lexikon », Franckh'sche Verlagshandlung, Stuttgart, 3. Auflage, Seite 1192).

(Siehe Tabelle 1 Seite 3 f.)

Das erfindungsgemäß zum Einsatz gelangende Rohmontanwachs unterscheidet sich von dem in der DE-OS 27 58 873 eingesetzten Divinol Koag.-Wachs dadurch, daß es aus einem Gemisch aus Wachsbestandteilen, Harzbestandteilen sowie « bituminösen » Bestandteilen besteht, während die Divinol Koag.-Wachs-Rezeptur hochveredelte Montanwachse enthält. Auch das erfindungsgemäß eingesetzte Carnaubawachs enthält Harzbestandteile und « bituminöse » Bestandteile, wenngleich seine

2

Tabelle 1

Charakterisierung von Rohmontanwachs und Carnaubawachs

| Kennzahlen | Rohmontanwachs | Carnaubawachs |
|---|---|---|
| SZ | 31 - 38 | 4 - 8 |
| VZ | 87 - 104 | 80 - 95 |
| Unverseifbares | 30 % | 50 - 53 % |
| (bez. auf Wachsanteil) | | |
| Wachsanteil | ca. 76 % | ca. 95 % |
| Harzanteil | ca. 24 % | ca. 5 % |
| Wachsbestandteile | | |
| Wachsester Monocarbonsäuren $\}$<br>    freie Monocarbonsäuren | ca. 44 % mit<br>vorwiegend $C_{26}/C_{28}/C_{30}/C_{32}$ | ca. 69 - 72 % mit<br>vorwiegend $C_{20} - C_{30}$ |
| freie Wachssäuren allgemein | ca. 14 % | ca. 3 - 3,5 % |
| Polyfunktionelle Carbonsäureester $\}$<br>Polyfunktionelle Wachssäuren | ca. 19 % | ca. 19 % |
| Wachsalkohole (aus dem unver-<br>seifbaren Anteil) | ca. 17 % mit vorwiegend<br>$C_{26}/C_{28}/C_{30}$ | ca. 2 - 3 % mit vorwiegend<br>$C_{22} - C_{28}$ |
| Kohlenwasserstoffe | ca. 1 - 2 % mit vorwiegend<br>$C_{29}/C_{31}/C_{33}$ | ca. 1,5 - 3 % mit vorwiegend<br>$C_{29}/C_{31}/C_{33}$ |

**0 168 625**

Zusammensetzung, wie der Tabelle 1 entnommen werden kann, deutlich verschieden ist von derjenigen des Rohmontanwachses (demgemäß unterscheiden sich auch die beiden erfindungsgemäß eingesetzten Wachstypen eindeutig in visueller Hinsicht und in ihrem Geruch).

Die erfindungsgemäß eingesetzten Wachskomponenten besitzen somit als gemeinsames Merkmal einen Harzanteil, der bei dem Rohmontanwachs ca. 24 % und bei dem Carnaubawachs ca. 5 % beträgt. Bei der Divinol Koag.-Wachs-Formulierung der DE-OS 27 58 873 ist dies nicht der Fall.

Was die Herkunft anbelangt, so wird das erfindungsgemäß eingesetzte Rohmontanwachs, auch Bitumen der Braunkohle genannt, aus Braunkohle gewonnen. Bei dem Carnaubawachs handelt es sich um ein Pflanzenwachs, das aus den Blättern der 6 bis 12 m hohen brasilianischen Carnaubapalme (Gattung Copernicia) in großtechnischem Maßstab gewonnen wird.

Im Gegensatz zu der DE-OS 27 58 873, bei der eine bevorzugte Wachsdispersion aus einem Gemisch aus Montanwachs und Paraffinabkömmlingen besteht, enthält die erfindungsgemäße Einkomponentenformulierung keine Paraffinabkömmlinge.

Die bevorzugte Menge für den Wachsanteil in der erfindungsgemäßen Einkomponentenformulierung beträgt 5-20 % (Gew./Gew.), vorzugsweise etwa 10-17 % (Gew./Gew.).

Bei der Komponente b) handelt es sich um Aminverbindungen, die in der Lage sind, als Wachsemulgatoren zusammen mit dem Wachs stabile Dispersionen in Wasser zu bilden. Ihr Mengenanteil beträgt 10-30 % (Gew./Gew.), vorzugweise etwa 15-25 % (Gew./Gew.), und insbesondere etwa 15-20 % (Gew./Gew.).

Als Komponente b) kommen erfindungsgemäß u. a. in Frage : Technisches Triäthanolamin, das aus ca. 85 Gew.-% reinem Triäthanolamin, 10-12 Gew.-% Diäthanolamin und 3-4 Gew.-% Monoäthanolamin besteht ; sowie die folgenden Verbindungen, die einzeln oder in Kombination eingesetzt werden können :

Diäthylaminoäthanol ;
2-Amino-2-methylpropanol ;
3-Methoxypropylamin ;
Morpholin ;
Tris-(hydroxymethyl)-aminomethan ;
2-Amino-2-äthylpropan-1,3-diol ;
und
2-Dimethylamino-2-methylpropanol.

Im Gegensatz zur DE-OS 27 58 873 ist bei der erfindungsgemäßen Einkomponentenformulierung eine Alkali-Komponente wie Natronlauge oder Kalilauge nicht geeignet, da das Reaktionsprodukt zwischen Rohmontanwachs und Kali- oder Natronlauge in Wasser keine stabilen Dispersionen ermöglicht. Weiterhin wird in der DE-OS 27 58 873 die Alkali-Komponente von der Wachsdispersion getrennt zugegeben (Zweikomponentenformulierung), während bei der vorliegenden Erfindung sämtliche zur Entklebung und Koagulation der Kunstharzlackanteile erforderlichen Bestandteile in einer Formulierung (Einkomponentenformulierung) enthalten sind.

Der Entschäumer c) wird, sofern erwünscht, in einer Menge von 0,1-5 % (Gew.-/Gew.), vorzugsweise etwa 1-3 % (Gew./Gew.), insbesondere etwa 2 % (Gew./Gew.), eingesetzt. Der mit dem Verfahren der DE-OS 27 58 873 verbundene Nachteil eines selbst bei Verwendung eines Entschäumers auftretenden starken Schäumens besteht bei der erfindungsgemäßen Formulierung nicht. Tritt jedoch ein vergleichsweise geringes Schäumen auf, kann dieses durch Zusatz der Komponente c) behoben werden Vorzugsweise werden als Komponente c) Polyätherderivate eines aliphatischen Alkohols, insbesondere äthoxylierte Fettalkohole bzw. äthoxylierte synthetische Fettalkohole, verwendet. Ein spezielles Beispiel für die Komponente c) ist der äthoxylierte Fettalkohol Afranil F flüssig® (in den Handel gebracht von BASF, D-6700 Ludwigshafen) als Stoffentlüfter für die Papier- und Kartonfabrikation) mit den folgenden Eigenschaften : farb- und geruchlose Flüssigkeit ; Dichte : 0,98/20 °C ; Viskosität : 300 mPa s ; Erstarrungspunkt : < — 20 °C ; Kp : > 200 °C ; nicht entflammbar.

Das Medium der erfindungsgemäßen Einkomponentenformulierung ist Wasser, das vorzugsweise im wesentlichen von den « klassischen » Härtebildnern, bei denen es sich vorwiegend um Calcium und Magnesium handelt, befreit wurde.

Vorzugsweise besitzt die erfindungsgemäße Einkomponentenformulierung folgende Zusammensetzung :

| | |
|---|---|
| Rohmontanwachs | 10 % (Gew./Gew.) |
| technisches Triäthanolamin | 25 % (Gew./Gew.) |
| enthärtetes Wasser | 63 % (Gew./Gew.) |
| Polyätherderivat eines aliphatischen Alkohols | 2 % (Gew./Gew.) |

Die Zubereitung der erfindungsgemäßen Einkomponentenformulierung kann folgendermaßen erfolgen :

Das Rohmontanwachs oder das Carnaubawachs werden bei ca. 120 °C geschmolzen. In diese

4

Schmelze wird die Komponente b) langsam eingerührt. Die Temperatur sollte hierbei nicht unter 100 ºC fallen. Dann wird so schnell wie möglich heißes Wasser (etwa die Hälfte der erforderlichen Wassermenge) eingerührt, anschließend wird der Rest der erforderlichen Wassermenge in Form von kaltem Wasser eingerührt und sofort bei einer Emulsionstemperatur von ca. 80 ºC der Entschäumer c) eingerührt. Das Produkt muß dann sofort abgefüllt werden ; es darf nicht offen stehen bleiben, da sonst die Gefahr einer Hautbildung an der Oberfläche des Produktes besteht.

Ein entscheidender Vorteil der erfindungsgemäßen Zusammensetzung gegenüber dem Stand der Technik besteht darin, daß sie in Abhängigkeit von der Einsatzkonzentration unterschiedliche Wirkungsweisen ergibt. Wird z. B. aufschwimmendes, d. h. an der Wasseroberfläche schwimmendes Lackkoagulat gewünscht (weil z. B. die Lackieranlage keinen Bodenräumer aufweist oder weil die Anlage speziell für aufschwimmendes Lackkoagulat konzipiert wurde), erfolgt üblicherweise eine Grunddosierung von etwa 0,1 bis maximal 0,5 % (Gew./Vol.), bezogen auf das Wasservolumen im Naßabscheider, und eine Nachdosierung von ca. 1 kg Einkomponentenformulierung pro 20 bis 25 kg Overspraylack. Verlangt die Funktionsweise der Lackieranlage sedimentierenden Lackschlamm, der dann z. B. über einen fest installierten Bodenräumer ausgeräumt werden kann, erhöht sich die Grunddosierung der Einkomponentenformulierung auf etwa 0,5-1 % (Gew./Vol.), bezogen auf das Wasservolumen im Naßabscheider, und die Nachdosierung auf 1 kg Einkomponentenformulierung pro 5 bis 10 kg Overspraylack.

Bei einer frisch eingesetzten Auswaschflotte beträgt somit die Grunddosierung 0,1-1 % (Gew./Vol.), bezogen auf das Wasservolumen im Naßabscheider, und die Nachdosierung beträgt eintsprechend den Anteilen an Overspraylack ca. 1 kg Einkomponentenformulierung pro 5 bis 20 kg Overspraylack. Entsprechend den vorstehenden Ausführungen bevorzugte Grunddosierungsmengen sind etwa 0,1 bis maximal 0,5 % (Gew./Vol.) bzw. 0,5 bis 1 % (Gew./Vol.) Einkomponentenformulierung, jeweils bezogen auf das Wasservolumen im Naßabscheider, sowie Nachdosierungen von ca. 1 kg Einkomponentenformulierung pro 5 bis 20 kg Overspraylack. Entsprechend den vorstehenden Ausführungen bevorzugte Grunddosierungsmengen sind etwa 0,1 bis maximal 0,5 % (Gew./Vol.) bzw. 0,5 bis 1 % (gew./Vol.) Einkomponentenformulierung, jeweils bezogen auf das Wasservolumen im Naßabscheider, sowie Nachdosierungen von ca. 1 kg Einkomponentenformulierung pro 20 bis 25 kg Overspraylack bzw 1 kg Einkomponentenformulierung pro 5 bis 10 kg Overspraylack.

Die erfindungsgemäße Einkomponentenformulierung ist somit vielseitig sowohl in Großanlagen als auch in kleinanlagen, die nur etwa 0,5 bis 4 m³ Wasserinhalt haben, einsetzbar.

Die erfindungsgemäße Einkomponentenformulierung eignet sich zur Entklebung und Koagulierung von Lösemittellacken. Beispiele für erfindungsgemäß entkleb- und koagulierbare Lacke sind :

Nitrolacke
Melamin-Alkydharzlacke
Acryl- und Polyesterlacke
Zweikomponentenacrylharzlacke
Polyurethanlacke
Metallic-Basislacke und Klarlacke.

Diese Lacke haben üblicherweise einen Festkörpergehalt bis zu ca. 50 %. Auch die sogenannte Highsolid-Einstellung mit einem Festkörpergehalt von 75-80 % wird von der erfindungsgemäßen Einkomponentenformulierung koaguliert und entklebt.

Des weiteren ist die erfindungsgemäße Einkomponentenformulierung wie gesagt in der Lage, sogenannten Hydrolack (wasserverdünnbaren Lack) zu koagulieren.

Die Erfindung betrifft daher auch die Verwendung der vorliegenden Einkomponentenformulierung zum Entkleben und Koagulieren von Kunstharzlackanteilen in Naßabscheidern von Spritzlackieranlagen.

Das folgende Beispiel erläutert die Erfindung.

Beispiel

Es wird folgende Einkomponentenformulierung hergestellt :

| | |
|---|---|
| Rohmontanwachs | 10 % (Gew./Gew.) |
| technisches Triäthanolamin | |
| (bestehend aus ca. 85 % Triäthanolamin | |
| 10-12 % Diäthanolamin | |
| 3-4 % Monoäthanolamin | 25 % (Gew./Gew.) |
| heißes enthärtetes Wasser | 30 % (Gew./Gew.) |
| kaltes enthärtetes Wasser | 33 % (Gew./Gew.) |
| Afranil F flüssig® | |
| (äthoxylierter Fettalkohol) | 2 % (Gew./Gew.) |

Hierzu wird das Rohmontanwachs bei ca. 120 ºC geschmolzen. In diese Schmelze wird das triäthanolamin langsam eingerührt. Die Temperatur soll hierbei nicht unter 100 ºC fallen. Dann wird so schnell als möglich das heiße Wasser eingerührt, anschließend der Anteil an kaltem Wasser und sofort bei einer Emulsionstemperatur von ca. 80 °C der Entschäumer. Das Produkt wird dann sofort abgefüllt.

Die vorstehende Einkomponentenformulierung wird zur Koagulierung eines Decklackes für Kraftfahrzeuge auf Polyurethanbasis (Hersteller Lesonal, Stuttgart) eingesetzt. Hierbei erhält man mit einer Grunddosierung von 0,1 % (Gew./Vol.) Einkomponentenformulierung und einer Nachdosierung von 1 kg Einkomponentenformulierung pro 15 kg Overspraymenge ein aufschwebendes entklebtes Koagulat.

**Patentansprüche**

1. Einkomponentenformulierung zur Entklebung und Koagulation von Kunstharzlackanteilen in Naßabscheidern von Spritzlackieranlagen sowohl zum Flottieren- als auch Sedimentierenlassen des entklebten Lackschlamms gekennzeichnet durch einen Gehalt an
a) 5 bis 20 Gew.-% Carnaubawachs oder Rohmontanwachs
b) 10 bis 30 Gew.-% eines Aminoalkohols, Aminoalkoholderivates oder von Morpholin und gegebenenfalls
c) 0,1 bis 0,5 Gew.-% eines Entschäumers,
jeweils bezogen auf das Gewicht der Formulierung, wobei der Rest der Formulierung durch Wasser gebildet wird.
2. Einkomponentenformulierung gemäß Anspruch 1, dadurch gekennzeichnet, daß sie als Komponente b) ein überwiegend Triäthanolamin enthaltendes Äthanolamingemisch enthält.
3. Einkomponentenformulierung gemäß Anspruch 1 und 2, dadurch gekennzeichnet, daß sie als Komponente b) ein technisches Triäthanolamin bestehend aus ca. 85 Gew.-% Triäthanolamin, 10-12 Gew.-% Diäthanolamin und 3 bis 4 Gew.-% Monäthanolamin enthält.
4. Einkomponentenformulierung gemäß Anspruch 1, dadurch gekennzeichnet, daß sie als Komponente c) ein Polyätherderivat eines aliphatischen Alkohols in Form eines äthoxylierten Fettalkohols enthält.
5. Verwendung der Einkomponentenformulierung gemäß einem der Ansprüche 1 bis 4 zur Entklebung und Koagulation von Kunstharzlackanteilen in Naßabscheidern von Spritzlackieranlagen.

**Claims**

1. A one-component formulation for detackifying and coagulating synthetic resin paint fractions in wet separators of paint-spraying installations, for causing the detackified paint sludge either to float or to sediment, which comprises
a) 5 to 20 % by weight of carnauba wax or raw montan wax,
b) 10 to 30 % weight of an aminoalcohol, aminoalcohol derivative or of morpholine and, if appropriate,
c) 0.1 to 5 % by weight of an antifoam,
each relative to the weight of the formulation, the remainder of the formulation being represented by water.
2. A one-component formulation as claimed in claim 1, which contains, as the component b), an ethanolamine mixture predominantly containing triethanolamine.
3. A one-component formulation as claimed in claim 1 or 2, which contains, as the component b), a technical triethanolamine consisting of about 85 % by weight of triethanolamine, 10-12 % by weight of diethanolamine and 3 to 4 % by weight of monoethanolamine.
4. A one-component formulation as claimed in claim 1, which contains, as the component c), a polyether derivative of an aliphatic alcohol in the form of an ethoxylated fatty alcohol.
5. The use of the one-component formulation as claimed in any one of claims 1 to 4 for detackifying and coagulating synthetic resin paint fractions in wet separators of paint-spraying installations.

**Revendications**

1. Composition à composant unique pour décoller et coaguler les parties formées de laque à base de résine synthétique dans les séparateurs à liquide des cabines de pulvérisation ainsi que pour faire flotter et aussi sédimenter la suspension de laque décollée, caractérisée par une teneur
a) de 5 à 20 % en poids de cire de carnauba ou en cire de lignite brute,
b) de 10 à 30 % en poids en un aminoalcool, en un dérivé d'aminoalcool ou en morpholine et éventuellement
c) de 0,1 à 5 % en poids en un antimousse,
par rapport chaque fois au poids de la composition, le reste de la composition étant constitué par de l'eau.
2. Composition à composant unique selon la revendication 1, caractérisée en ce qu'elle contient comme constituant b) un mélange d'éthanolamines renfermant principalement de la triéthanolamine.

3. Composition à composant unique selon les revendications 1 et 2, caractérisée en ce qu'elle contient comme constituant b) une triéthanolamine technique composée d'environ 85 % en poids de triéthanolamine, d'environ 10-12 % en poids de diéthanolamine et d'environ 3 à 4 % en poids de monoéthanolamine.

4. Composition à composant unique selon la revendication 1, caractérisée en ce qu'elle contient comme constituant c) un dérivé de polyéther d'un alcool aliphatique sous forme d'un alcool gras éthoxylé.

5. Utilisation de la composition à composant unique selon l'une des revendications 1 à 4 pour décoller et coaguler les parties formées de laque à base de résine synthétique dans les séparateurs à liquide des cabines de pulvérisation.